(19) Europäisches Patentamt
European Patent Office
Office européen des brevets

(11) EP 2 075 273 A1

(12) EUROPEAN PATENT APPLICATION

(43) Date of publication:
**01.07.2009 Bulletin 2009/27**

(51) Int Cl.:
***C08G 18/67*** *(2006.01)* ***C08G 18/81*** *(2006.01)*

(21) Application number: **07025236.6**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Mnemoscience GmbH**
**52531 Uebach-Palenberg (DE)**

(72) Inventors:
- **Hasson, Ali Abdulla Tareq**
  **52062 Aachen (DE)**
- **Boltersdorf, Dagmar**
  **52372 Kreuzau (DE)**
- **Cosemans, Maurice**
  **52525 Heinsberg-Waldenrath (DE)**
- **Kremer, Tanja**
  **52134 Herzogenrath (DE)**
- **Schmidt, Werner Ralf**
  **52064 Aachen (DE)**

(74) Representative: **Grünecker, Kinkeldey, Stockmair & Schwanhäusser**
**Anwaltssozietät**
**Leopoldstrasse 4**
**80802 München (DE)**

# (54) Multiple shape memory polymer networks

(57) The invention relates to a precursor for shape memory polymer network compositions, which are able to hold more than one shape in memory (M-SMP precursor), that includes at least two different oligomeric segments, wherein the precursor includes at least one crosslinkable group, and can be crosslinked to obtain a shape memory polymer network, which is able to hold more than one shape in memory (M-SMP network), **characterized in that** the precursor is a composition of one of formulae (**I-A**) to (**I-G**).

EP 2 075 273 A1

**Description**

## BACKGROUND OF THE INVENTION

### 1. Field of the Invention

The invention relates to a precursor for a shape memory polymer (SMP) network that is able to hold more than one shape in memory, convenient processing methods using said precursor, SMP polymer networks (thermosets) obtainable by crosslinking the precursor, as well as articles thereof, the production of such articles, their programming and their use.

### 2. Description of the Related Art

The shape memory effect (SME) or shape memory functionality is a phenomenon already known and established for metal alloys as well as polymers. Shape memory functionality is the ability of a material to temporarily fix a second shape after an elastic deformation and only recover the original (first shape, permanent shape) after application of an external stimulus. The advantageous and intriguing properties of shape memory materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The effect/functionality results from a combination of material structure and specific functionalization processes.

As already indicated above, the first materials known to provide this functionality were metallic shape memory alloys. Recently, shape memory polymers (SMPs) have been developed to replace or augment the use of SMAs, in part because the polymers are light, high in shape recovery ability, easy to manipulate, and economical, and have a better biocompatibility as compared with SMAs. Typical SMPs are, for example, phase segregated linear block copolymers, having a hard segment and a switching (soft) segment, typically thermoplastic materials. The hard segment usually fixes the permanent form and is typically crystalline, with a defined melting point, and the soft segment is typically amorphous, with a defined glass transition temperature. In some embodiments, however, the hard segment is amorphous and has a glass transition temperature rather than a melting point. In other embodiments, the soft segment is crystalline and has a melting point rather than a glass transition temperature. The melting point or glass transition temperature of the soft segment is substantially less than the melting point or glass transition temperature of the hard segment.

As described above, the SME is enabled by the SMP's structure and morphology but is only available after modification, in particular deformation, of the permanent shape into a temporary shape, a process that is usually called the programming of a SMP. The material can readily recover to its original molded shape following numerous thermal cycles, and a thermoplastic SMP can be heated above the melting point of the hard segment and reshaped and cooled to fix a new original shape. Properties that describe the shape memory capabilities of a material include the shape recovery of the original shape and the shape fixity of the temporary shape.

When a thermoplastic SMP is heated above the melting point or glass transition temperature of the hard segment, the material can be shaped. This shape, also called the original or permanent shape, can be memorized by cooling the SMP below the melting point or glass transition temperature of the hard segment.

A specific class of SMPs are polymer networks (thermosets) including soft segments (switching segments) and chemical covalent network points / crosslinks, which provide the function of the hard segments, so that for SMP networks the permanent shape is determined by the covalent network structure.

Representative SMPs are disclosed in U.S. Patent Nos. 6,720,402; 6,388,043; 6,160,084; 7,217,744; 6,852,825; and 7,037,984, international publications WO99/42528, WO 99/42147, WO 2004/046221, WO 2004/062706, WO 2004/090042, WO 2005/012388, WO 2005/028534, WO 2007/096708, and European publications EP1846470 and EP 1818348. U.S. Patent No. 6,720,402, U.S. Patent No. US 6,388,043 and international publication WO99/42528 disclose SMPs with shapes in memory that are elicited by a stimulus other than the commonly used change (increase) in temperature, for example the application of light, changes in ionic concentration and/or pH, electric field, magnetic field or ultrasound. Specific SMPs sensitive to light are known from WO 2004/062706, and those sensitive to pH and/or ionic strength from EP1837160 and EP1818346. SMPs especially suitable to control drug release by the SME are disclosed in WO 2004/006885 and U.S. Patent Application Publication No. 2006/0140999.

SMPs that can form objects which are able to hold more than one shape in memory are known from U.S. Patent Nos. 6,720,402; 6,388,043; and 7,037,984, international publications WO99/42528, WO2007104757, and WO2007118766. EP1818161 discloses specific SMP embodiments, wherein different stimuli are used to mutually independently trigger the release of two or more shapes in memory. Materials, that are able to hold two shapes in memory, are also called triple shape materials.

Although the known shape memory polymers which are able to hold more than one shape in memory have

been found to be versatile and to have many promising applications and uses, their variety is limited. As such alternatives are required to have a broader selection of the polymer, and thereby a better chance to find the material that is most suitable for an intended application, method of use or device.

Therefore, it was an object of the invention to find alternative shape memory polymer materials which are able to hold more than one shape in memory.

It was also an object of the invention that such materials should have excellent shape memory properties, that it should be able to produce articles therefrom conveniently and cost efficient, and that they have comparable or even better mechanical properties, a higher mechanical long-term stability, and a lower recoil then the known materials.

## SUMMARY OF THE INVENTION

The invention solves the above objects with the precursor composition for shape memory polymer networks, which are able to hold more than one shape in memory (M-SMP precursor), convenient processing methods using said precursor, their crosslinking, M-SMP polymer networks (thermosets) obtainable thereby, articles thereof, the production of such articles, the programming of the articles to have a shape in memory and the use of the articles of the invention. Accordingly the present invention provides the subject matter as defined in the claims and the following specification. In embodiments the present invention provides the following:

1. A precursor composition for shape memory polymer networks capable of holding more than one shape in memory comprising at least two different oligomeric segments,
wherein the precursor comprises at least one crosslinkable group,
wherein the precursor can be crosslinked to obtain a shape memory polymer network capable of holding more than one shape in memory,
wherein the precursor comprises at least one composition of formulae **(I-A)** to **(I-G):**
wherein composition **(I-A)** comprises two different oligomeric polyols and a diisocyanate, that comprises a crosslinkable group;
wherein composition **(I-B)** is produced in a two-step process, wherein at first two different oligomeric polyols and a diisocyanate, wherein the diisocyanate is added in molar excess with respect to the hydroxy groups of the polyols, are linked by reaction of the hydroxy and the isocyanate groups to give an isocyanate group terminated block copolymer in the first step, to which a hydroxy-substituted crosslinkable compound is added in a second step;
wherein composition **(I-C)** comprises two different oligomers that are obtainable by terminal functionalization of oligomeric polyols with crosslinkable groups;
wherein composition **(I-D)** comprises two different oligomers that are obtainable by functionalization of two different oligomeric polyols independently from each other with a diisocyanate that comprises a crosslinkable group;
wherein composition **(I-E)** comprises a block copolymer with two different oligomeric blocks,
wherein the block copolymer is terminally functionalized with crosslinkable groups;
wherein composition **(I-F)** comprises two different oligomeric polyols and a diisocyanate,
wherein at least one of the polyols has more than two hydroxy groups; and
wherein composition **(I-G)** comprises components for two polymer systems, that can independently be crosslinked by different crosslinking mechanisms.

2. The precursor according to item 1, wherein the crosslinkable group of said precursor is format least one of a vinyl group, a substituted acrylate group, an unsubstituted acrylate group and combinations thereof.

3. The precursor according to any of the preceding items, further comprising at least one polymeric, oligomeric and low-molecular weight ingredient.

4. A method for forming precursor composition for shape memory polymer networks comprising forming the precursor of any of items 1-3 by at least one conventional process used to form thermoplastic polymers into a shape.

5. A method for the production of a precursor composition for shape memory polymer network, comprising use of the precursor composition for shape memory polymer network according to any of items 1 to 3, wherein said the precursor composition for shape memory polymer network is crosslinked.

6. The method according to item 5, wherein at least one of UV radiation and thermal energy is used to crosslink said precursor composition for shape memory polymer network.

7. A shape memory polymer network obtained by the method according to any of items 5 or 6.

8. The shape memory polymer network according to item 7, wherein said shape memory polymer network has at least one shape in memory.

9. The shape memory polymer network according to item 8, wherein said shape memory polymer network has at least two shapes in memory.

10. A method for forming a shape memory polymer network article, wherein said shape memory polymer network is formed by at least one conventional process used to form thermoplastic polymers into a shape followed by the method according to any of items 5 or 6 is executed.

11. A shape memory polymer network article comprising a shape memory polymer network according to any of items 7 to 9.

12. The shape memory polymer network article according to item 11, wherein said shape memory polymer network article is produced according to the method of item 10.

13. The shape memory polymer network article according to any of items 11 or 12,
wherein said shape memory polymer network article at least partially encloses a hollow space.

14. The shape memory polymer network article according to any of items 11 to 13,
wherein said shape memory polymer network article formed is at least one of sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

15. A method of programming a shape memory polymer network article according to any of items 11-14 comprising

i) heating the shape memory polymer network article to a temperature that is above the transition temperature of the soft segment with the higher transition temperature, but below the decomposition temperature of the shape memory polymer network article,

ii) forming the shape memory polymer network article into a first arbitrary shape, and

iii) fixing the shape memory polymer network article in the first shape until the temperature has been reduced below said transition temperature, but is still higher than the transition temperature of another soft segment,

iv) forming the shape memory polymer network article into a second arbitrary shape, and

v) fixed the second shape until the temperature has been reduced below this transition temperature.

16. A shape memory polymer network article according to any of items 11 to 14, wherein said shape memory polymer network article has at least one shape in memory.

17. The shape memory polymer network article according to item 16, wherein said shape memory polymer network article has at least two shapes in memory.

18. The shape memory polymer network article according to item 17, wherein said shape memory polymer network article is obtained by the method of item 15.

19. Use of and shape memory polymer network article according to any of items 11 to 14, and 16 or 18.

## BRIEF DESCRIPTION OF THE FIGURES

The accompanying drawings, which are included to provide a further understanding of the invention and are incorporated in and constitute a part of this specification, illustrate embodiments of the invention and together with the description serve to explain the principles of the invention. In the drawings:
**Fig. 1** illustrates triple shape material **I-A-2 NW** in the permanent form (shape) of a stripe.

**Fig. 2** illustrates the material programmed into the first temporary form, a rolled-up stripe (spool).

**Fig. 3** illustrates the material programmed into the second temporary form, a spirally cutted tube.

**Fig. 4** illustrates the material in the process of recovering the first temporary shape, shortly after heating of the material according to **Fig. 3** to a temperature of approximately 50° C.

**Fig. 5** illustrates the material after final recovery of the first temporary shape, after heating of the material according to **Fig. 3** to a temperature of approximately 50° C.

**Fig. 6** illustrates the material after recovery of the permanent shape after heating the material according to **Fig. 5** to a temperature of approximately 90° C. Approximately the same form was achieved by heating the material of **Fig. 3** or directly the material of **Fig. 2** to a temperature of approximately 90° C. This makes clear, that the triple shape material of the invention can also advantageously been used as a two (dual) shape material.

## DETAILED DESCRIPTION OF THE INVENTION

The invention includes a precursor composition for shape memory polymer networks which are able to hold more than one shape in memory (precursor for multiple shape memory polymers, M-SMP precursor), that includes at least two different oligomeric segments (blocks), wherein the precursor includes at least one crosslinkable group, and can be crosslinked to obtain a shape memory polymer network, which is able to hold more than one shape in memory (M-SMP network), characterized in that the precursor is a composition of one of formulae **(I-A)** to **(I-G)** described below.

Said different segments preferably each are present at a ratio of at least approximately 5 weight-% (wt-%), preferably of at least approximately 20 wt-%, with regard to the total non-volatile mass of the M-SMP precursor of the invention in order to achieve a strong shape memory effect.

In a preferred embodiment of the invention, the M-SMP network is able to hold two, three, or four shapes in memory, and in particular it is able to hold two shapes in memory (triple SMP network, T-SMP network).

The at least two different oligomeric segments (blocks) can be present in the M-SMP precursor of the invention in the form of oligomeric polyols (polyols **(A)** and **(B)** of the invention), but also as other types of oligomers or as part of polymers. In the latter case, said segments can be included in separate block polymers (block polymers of the invention), or can be included in the same block copolymer (block copolymers of the invention).

The term "block polymer" according to the invention means, that the polymer includes at least one oligomeric block (segment) that may originate from polyols **(A)** or **(B)** of the invention, that can act as a soft segment. Oligomeric blocks are also referred to as oligomeric (organic) linking groups in the following. Preferably such oligomeric blocks have a mean molecular weight of from approximately 1,000 g/mol to approximately 20,000 g/mol, in particular of from approximately 1,500 g/mol to approximately 15,000 g/mol. The block polymer preferably is essentially linear, which means in the context of the invention, that it includes predominantly a linear chain and is only crosslinked two-dimensionally or three-dimensionally to a small extent. The degree of crosslinking of the block polymer of the invention should be low enough that the M-SMP precursor can be processed by conventional methods such as extrusion or injection molding.

As far as the present application refers to low molecular weight compounds, segments, components etc. the present invention refers to a mean molecular weight of 1000 g/mol or less, in embodiments 500 g/mol or less, such as from 100 g/mol to 400 g/mol, or from 150 g/mol to 300 g/mol. When the present invention refers to oligomers or oligomeric segments, compounds, components etc. the present invention refers to a mean molecular weight as defined above in paragraph [0015], and in embodiments to mean molecular weights of from 2000 g/ mol to 10000 g/mol. All mean molecular weights refer, unless otherwise stated, to number average values as obtained by SEC (GPC) described later.

The term "block copolymer" according to the invention has the same meaning as specified above, with the difference, that the polymer includes at least two different oligomeric blocks that may originate from polyols **(A)** and **(B)** of the invention as specified above (blocks **(A)** and **(B)**). The different blocks preferably are randomly linked, but it is also within the context of the invention to prepare block copolymers with a defined number of directly linked blocks **(A)** and/or blocks **(B)** by synthetical methods known for block copolymers.

The different oligomeric blocks **(A)** and **(B)** of the invention can be selected by the criteria, that they can fix a temporary shape, and that it is possible to recover the shape fixed by one of the blocks (the first shape) without influencing to a significant degree the shape, that is fixed by the other block (the second shape). The latter can be achieved, if the transition temperatures of the blocks differ enough such that at a temperature high enough to release the first shape, the second shape is essentially stable. The optimal temperature difference, and thereby the optimal selection of appropriate blocks, may vary from the kind of application, and in particular from the heating rate and the thickness of the material, so that it is preferably determined experimentally. Usually, it is preferred if the transition temperatures of the blocks differ by at least approximately 10° C, in particular by at least approximately 20° C, and particularly preferred by at least approximately 30° C.

For example, the M-SMP network of the invention can include in addition to the network structure, that defines the permanent shape, blocks (segments) **(A)** and **(B)**

wherein the $T_{trans}$ of segment **(A)** is between approximately -30° C and approximately 270° C, and is at least approximately

10° C, and preferably at least approximately 20° C, higher than the $T_{trans}$ of segment **(B)**, and the $Tt_{rans}$ of each subsequent soft segment is at least approximately 10° C, preferably at least approximately 20° C, and particularly preferred at least approximately 30 °C, lower than the $T_{trans}$ of the preceding segment. For many applications it is preferred if the lowest $T_{trans}$ is at least 0° C, in particular at least 20° C.

In another embodiment of the invention, the blocks are sensitive to different stimuli as described above, so that the shapes in memory can be recovered independently.

The oligomeric polyol of the invention preferably is a di-, tri-, tetra-, penta- or hexahydroxy compound, for which it is particularly preferred, if each of the hydroxy groups is located at the end of an oligomeric polymer block, wherein in the case of a diol only one block may be present, and otherwise multiple blocks are present (e.g., 2, 3, 4, 5, 6, and more blocks), that may be linked to a common central molecule (star shape), or that are linked to a common chain (comb shape), or a combination thereof. Preferably the polyol of the invention is an oligomeric diol, in particular a $\alpha,\omega$-dihydroxy substituted oligomeric compound, as is in more detail described below.

The crosslinkable group of the invention can be reacted by known methods to give covalent links (crosslinks) between separate molecules of the block polymer. Preferably the crosslinkable group is selected from organic groups including at least one substituted or unsubstituted ethenylene group (-CH=CH-), in particular vinyl groups or acrylate groups, and their crosslinking is promoted thermally, by ultra violet light (UV), or by a combination of thermal and UV energy. An acrylate group of the invention can be substituted or unsubstituted; suitable substituents in $\alpha$- and/or $\beta$-position of the carboxylic acid group are selected from hydrogen atoms and usual organic radicals, in particular from hydrogen atoms and alkyl groups with less than 7 carbon atoms. Particularly preferred are unsubstituted acrylate groups (only hydrogen atoms as substituents) and $\alpha$-methylacrylate groups.

The block polymers and block copolymers of the invention preferably have a mean molecular weight of from approximately 30,000 g/mol to approximately 400,000 g/mol, and in particular from approximately 40,000 g/mol to approximately 200,000 g/mol, and they may include polymeric and/or oligomeric and/or low-molecular weight ingredients, that are known to advantageously influence the desired properties of polymers, or that are necessary for a desired application. Therefore, blends of the block polymer or the block copolymer of the invention with other polymers or with a different block polymer or block copolymer of the invention may also be included in the M-SMP precursor of the invention.

In the following are described the M-SMP network precursor compositions of the invention **(I-A)** to **(I-F)**, that demonstrate the broad variety of the invention.

The M-SMP network precursor composition **(I-A)** includes two different oligomeric polyols of the invention, in particular diols of formulae **(II-A)** and **(II-B)**, and a diisocyanate of formula **(III-A)**, that includes a crosslinkable group. A preferred example thereof is shown in the following:

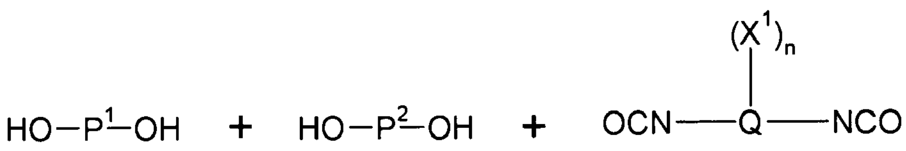

**(II-A)** **(II-B)** **(III-A)** **(I-A),**

wherein

| | |
|---|---|
| $P^1$,$P^2$ | mutually independently mean an oligomeric organic linking group, |
| Q | means an organic linking group, preferably of low molecular weight, |
| $(X^1)_n$ | means a crosslinkable group, that is no isocyanate group, preferably an acrylate group, and |
| n | is an integer of at least 1, preferably from 1 to 10, and particularly preferred from 2 to 6. |

Organic linking groups of the invention can be oligomeric or of low molecular weight. Low molecular weight organic linking groups preferably have a molecular weight of less than approximately 1, 000, in particular less then approximately 500, and particularly preferred less than approximately 300. They are understood to be organic radicals, that preferably are aliphatic, can be substituted or unsubstituted, and can include organic groups such as ether groups, acyl groups, ester groups, carbonyl groups, amide groups, carboxylic acid groups, urethane groups, unsaturated groups, amino groups, and the like.

The precursor **(I-A)** can be crosslinked to give M-SMP networks, that are referred herein as **(I-A NW)**, by synthetic methods known to a person skilled in the art,

wherein preferably at first the thermal crosslinking step is performed by reaction of the hydroxy and the isocyanate groups and thereafter the crosslinking is completed by the reaction of the crosslinkable group ($X^1$), that preferably is

photoinduced.

The M-SMP network precursor composition **(I-B)** is produced in a two-step process, wherein at first two different oligomeric polyols of the invention, in particular diols of formulae **(II-A)** and **(II-B)**, and a diisocyanate of formula **(III-B)**, that is added in molar excess with respect to the hydroxy groups of the polyols, are linked by reaction of the hydroxy and the isocyanate groups to give an isocyanate group terminated block copolymer in the first step, to which a hydroxy-substituted crosslinkable compound of formula **(IV)** is added in the second step. A preferred example thereof is shown in the following

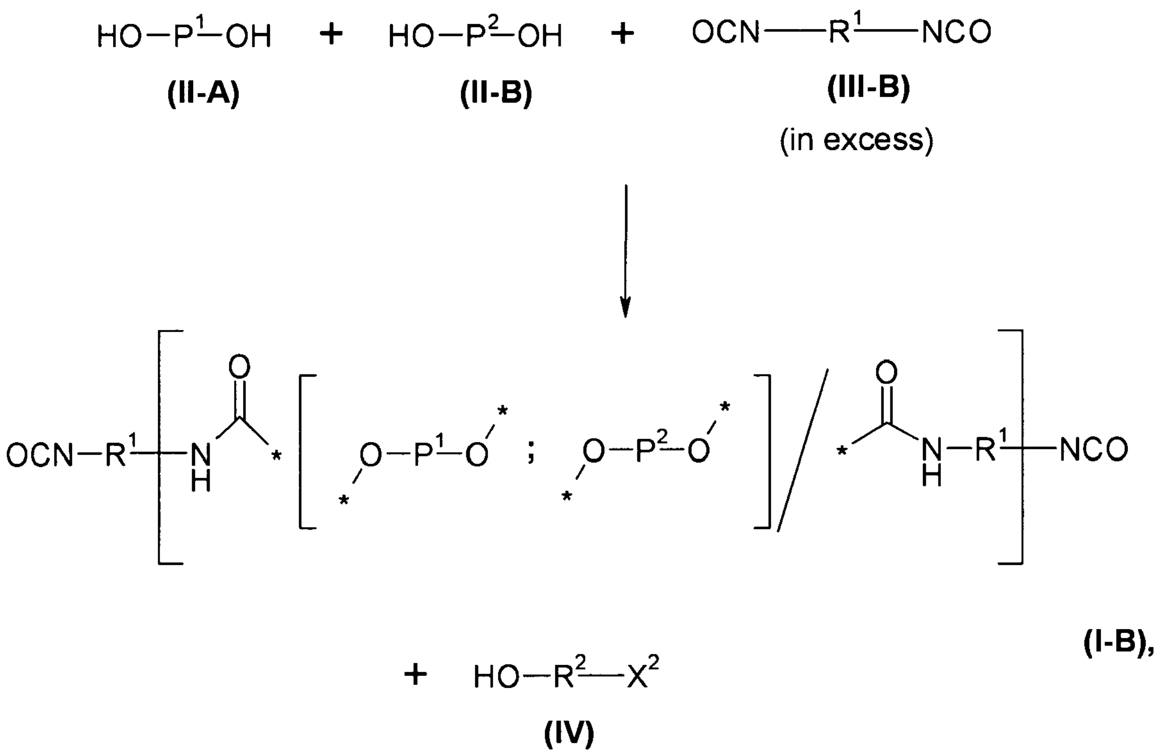

**(II-A)** **(II-B)** **(III-B)** (in excess)

**(I-B),**

**(IV)**

wherein

| | |
|---|---|
| $R^1$, $R^2$ | mutually independently mean an organic linking group, preferably of low molecular weight, |
| $X^2$ | means a crosslinkable group, that is no isocyanate group, preferably an acrylate group, and |
| $P^1$ and $P^2$ | have the same meaning as described above. |

In a preferred embodiment of the invention, the compound of formula **(IV)** is a hydroxyacrylate, wherein $X^2$ is an acrylate group, and $R^2$ is an aliphatic linking group including 2 to 6 carbon atoms. A particularly preferred example of a compound of formula **(IV)** is:

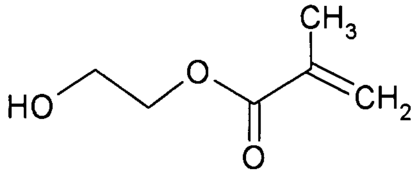

**(IV-1).**

The precursor **(I-B)** can be crosslinked to give M-SMP networks, that are referred herein as **(I-B NW)**, by synthetic methods known to a person skilled in the art,
wherein at first the thermal crosslinking step is performed by reaction of the hydroxy and the isocyanate groups to give

block copolymers with crosslinkable terminal end groups, and thereafter the crosslinking is completed by the reaction of the crosslinkable group ($X^2$), that preferably is photoinduced.

The M-SMP network precursor composition **(I-C)** includes two different oligomers of the invention, in particular oligomers of formulae **(V-A)** and **(V-B)**, that can be obtained by terminal functionalization of polyols of the invention, in particular diols of formulae **(II-A)** and **(II-B)** with crosslinkable groups. A preferred example thereof is shown in the following:

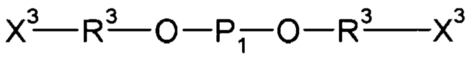

**(V-A),**

**+** **(I-C),**

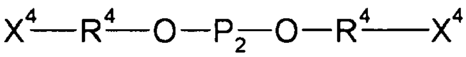

**(V-B),**

wherein

| | |
|---|---|
| $R^3$, $R^4$ | mutually independently mean an organic linking group, preferably of low molecular weight, |
| $X^3$, $X^4$ | mutually independently mean a crosslinkable group, that is no isocyanate group, preferably an acrylate group, and |
| $P^1$ and $P^2$ | have the same meaning as described above. |

$R^3$ and $R^4$ may be different, but preferably have the same meaning. They usually are aliphatic di-radicals with a molecular weight of less then approximately 400 g/mol, in particular less than approximately 200 g/mol.

In a particularly preferred embodiment of the invention, the groups $-R^3-X^3$ and/or $-R^4-X^4$ are the following group:

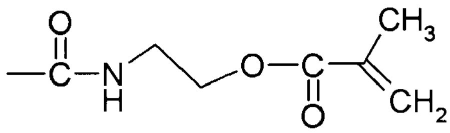

Examples of preferred oligomers of the invention, in particular those of formulae **(V-A)** and **(V-B)**, are the macro-polyacrylates described in int. publication WO 2007/096708, the disclosure of which is enclosed herein by reference

The precursor **(I-C)** can be crosslinked to give M-SMP networks, that are referred herein as (**I-C NW**), by synthetic methods known to a person skilled in the art, wherein the crosslinking is performed by the reaction of the crosslinkable groups $X^3$ and $X^4$, that preferably is photoinduced.

The M-SMP network precursor composition **(I-D)** includes two different oligomers of the invention, in particular oligomers of formulae **(VI-A)** and **(VI-B)**, that can be obtained by functionalization of polyols of the invention, in particular the diols of formulae **(II-A)** and **(II-B)**, independently from each other with a diisocyanate of formula **(III-A)**, that include crosslinkable groups. A preferred example thereof is shown in the following:

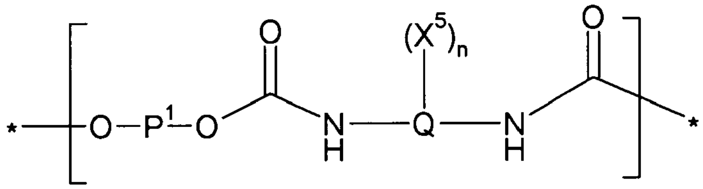

**(VI-A)**

**+** **(I-D),**

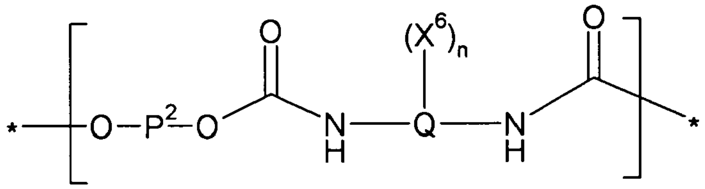

**(VI-B)**

wherein

| | |
|---|---|
| $X^5$, $X^6$ | mutually independently mean a crosslinkable group, that is no isocyanate group, preferably an acrylate group, and |
| $P^1$, and $P^2$, | and Q have the same meaning as described above. |

The precursor **(I-D)** can be crosslinked to give M-SMP networks, that are referred herein as **(I-D NW)**, by synthetic methods known to a person skilled in the art,
wherein the crosslinking is performed by the reaction of the crosslinkable groups $X^5$ and $X^6$, that preferably is photoinduced.

The oligomers of formulae **(VI-A)** and **(VI-B)** can be obtained according to the following reaction mechanism **(A)**, that is exemplary shown for the production of the oligomer **(VI-A)**:

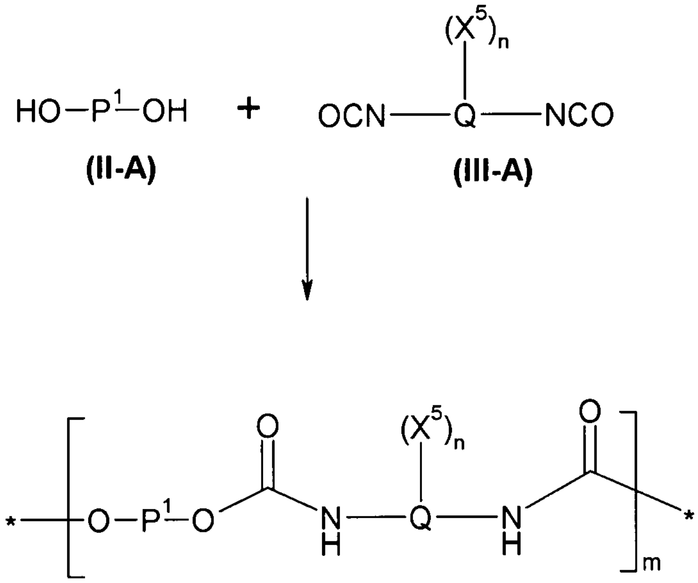

(II-A) (III-A)

Reaction (A),

(VI-A)

wherein the substituents have the same meaning as described above.

The M-SMP network precursor composition **(I-E)** includes a block copolymer with blocks **(A)** and **(B)**, wherein the block copolymer is terminally functionalized with crosslinkable groups. A preferred example thereof is shown in the following, that includes a block copolymer of the invention of formula **(VII)**:

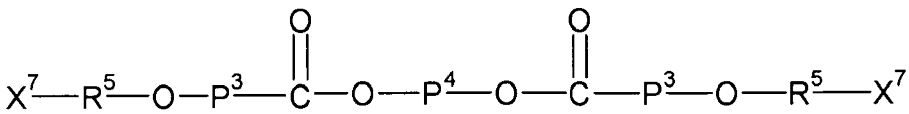

**(I-E),**

**(VII)**

wherein

- $P^3$, $P^4$ mutually independently mean an oligomeric organic linking group,
- $R^5$ means an organic linking group, preferably of low molecular weight, and
- $X^7$ means a crosslinkable group, that is no isocyanate group, preferably an acrylate group.

Preferably $R^5$ has the same meaning as described above for $R^3$ and $R^4$, $X^7$ has the same meaning as described above for $X^3$ and $X^4$, and therefore $-R^5-R^7$ also has the same meaning as described above for $-R^3-X^3$ and $-R^4-X^4$.

The block copolymer of formula **(VII)** can be synthesized by known methods and the precursor **(I-E)** can be crosslinked to give M-SMP networks, that are referred herein as **(I-E NW)**, by synthetic methods also known to a person skilled in the art, wherein the crosslinking is performed by the reaction of the crosslinkable groups $X^7$, that preferably is photoinduced.

The M-SMP network precursor composition **(I-F)** includes two different oligomeric polyols of the invention, in particular polyols of formulae **(II-A)** and **(II-B)**, and a diisocyanate of formula **(III-B)**, wherein at least one of the polyols has more then two hydroxy groups. A preferred example thereof is shown in the following:

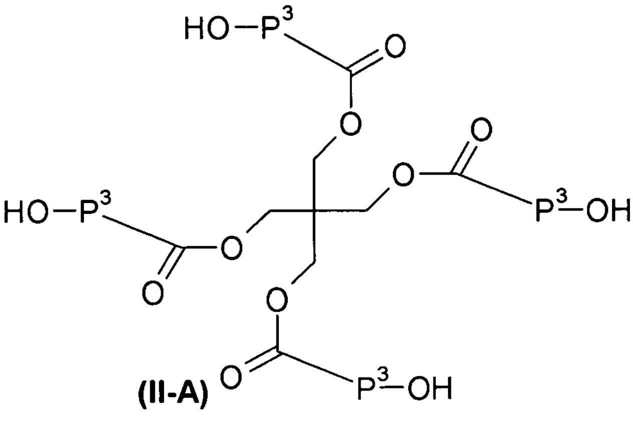

(II-A)

+

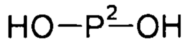

(II-B)

(I-F),

+

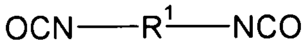

(III-B)

wherein the substituents have the same meaning as described above.

The precursor **(I-F)** can be crosslinked to give M-SMP networks, that are referred herein as **(I-F NW)**, by synthetic methods known to a person skilled in the art,
wherein the crosslinking is performed by the reaction of the hydroxy groups with the isocyanate groups, and is thermally induced.

The M-SMP network precursor composition **(I-G)** includes components for two polymer systems that can independently be crosslinked by different crosslinking mechanisms (dual cure composition). A preferred example thereof is shown in the following:

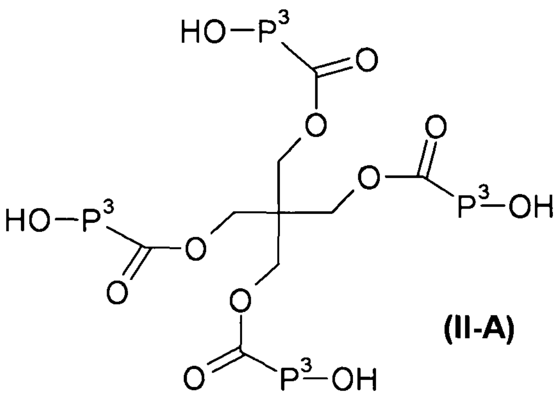

(II-A)

+

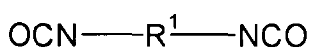

(III-B)

(I-G),

+

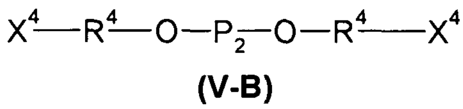

(V-B)

wherein the substituents have the same meaning as described above.

The precursor **(I-G)** can be crosslinked to give M-SMP networks, that are referred herein as **(I-G NW)**, by synthetic methods known to a person skilled in the art,
wherein preferably at first the thermal crosslinking step is performed by reaction of the hydroxy and the isocyanate

groups and thereafter the crosslinking is completed by the reaction of the crosslinkable group ($X^4$), that preferably is photoinduced. In a further embodiment of the invention, the crosslinking steps are performed in the reverse order, so that at first the crosslinking via group ($X^4$) and then via the isocyanate groups is performed, or both crosslinking reactions are performed simultaneously.

As the crosslinking reaction between compounds **(II-A)** and **(III-B)** is essentially independent from the crosslinking of compound **(V-B)**, an interpenetrating network is obtained.

In a preferred embodiment of the invention the polyols of the invention are diols of formula **(II-A)** and/or **(II-B)**, together herein also referred to as polyols of formula (**II**), that are selected from polyester polyols, polyether polyols, polycarbonate polyols, polyester-polyether polyols, polycarbonate-polyester polyols, and polycarbonate-polyether polyols,
wherein the polymers can be obtained by known synthetic procedures and can be homopolymers, copolymers and/or block copolymers. Such polyols preferably are oligomeric with a mean molecular weight of from approximately 1,000 g/mol to approximately 20,000 g/mol, in particular from approximately 2,000 g/mol to approximately 10,000 g/mol.

The polyester polyols of formula **(II)** of the invention preferably are synthesized by ring opening polymerization of cyclic lactones, by polycondensation of polycarboxylic acid or carboxylic acid derivatives with polyhydroxy compounds, or by polycondensation of hydroxycarboxylic acids or polyhydroxy carboxylic acids.

Preferred examples of polyester polyols of formula **(II)** of the invention include:
poly(ε-caprolactone) diols (PCL); poly(ω-pentadecalactone) diols (PPDL); hydroxy terminated polyesters obtainable from dicarboxylic acids or dicarboxylic acid esters and diols, such as e.g. poly(1,6-hexamethylene adipate) diols, poly(1,6-hexamethylene sebacate) diols or poly(1,10-decamethylene sebacate) diols; poly(ε-caprolactone-co-glycolide) diols; poly(ε-caprolactone-co-lactide) diols; poly(ε-caprolactone-co-glycolide-colactide) diols; poly(lactide-co-glycolide) diols; poly(ε-caprolactone-co-ω-pentadecalactone) diols; poly(lactide)-poly(ε-caprolactone)-poly(lactide) ABA type block copolymer diols; poly(lactide-co-glycolide)-poly(ε-caprolactone)-poly(lactide-co-glycolide) A/A'-B-A/A' type block copolymer diols; and poly(ε-caprolactone)-poly(ω-pentadecalactone)-poly(ε-caprolactone) ABA type block copolymer diols.

Lactide units that may be included in the polyols of formula **(II)** of the invention preferably are L,L- or D,L-dilactide units, and particularly preferred L,L-dilactide units. The dilactide and diglycolide units that may be included in the polyols of formula (**II**) preferably are obtained by ring opening polymerization of the corresponding dilactide and diglycolide rings. In polyols of formula (**II**) that are copolymers and include glycolic acid units, such monomeric units are preferably present in an amount of approximately 40 weight-% or less, in particular from approximately 0.5 to approximately 35 weight-%, with respect to all monomers present in the polyol.

The polyester polyols of formula **(II)** preferably are linear oligomers with a low-molecular weight diol in the middle of the polymer chain, polyester blocks of approximately the same length bond to each hydroxy group of said diol, and with terminal hydroxy groups. The polyester polyols can preferably be obtained by ring-opening polymerization of the appropriate lactone in the presence of a low-molecular weight diol that acts as the polymerization initiator. Said low-molecular weight diol preferably has a molecular weight of less than approximately 500, in particular less than approximately 200 g/mol. Examples for preferred low-molecular weight diols of the invention are substituted or unsubstituted aliphatic diols, in particular alkylene diols with 2 to 10 carbon atoms like ethylene glycol, diethylene glycol, n-butane-1,4-diol, n-octane-1,8-diol, n-decane-1,10-diol, and 2,2-bis-(hydroxymethyl)-propionic acid (HMPA-diol).

Preferred examples of polyether polyols of formula **(II)** of the invention are polyethylene glycol (PEG), polypropylene glycol (PPG), poly-tetrahydrofurane (Poly-THF, pTHF), and block copolymers from PEG and PPG.

Preferred examples of polyester-polyether polyols of formula (**II**) of the invention are ABA block copolymer diols with terminal hydroxy groups, wherein **"A"** means poly(ε-caprolactone), poly(ω-pentadecalactone), poly(lactide), poly (glycolide), poly(ε-caprolactone-co-glycolide), poly(ε-caprolactone-co-lactide), poly(lactide-co-glycolide), poly(ε-caprolactone-co-pentadecalactone), poly(lactide-co-glycolide-co-caprolactone), and **"B"** means poly(ethylene glycol), polypropylene glycol, poly-tetrahydrofurane, or block copolymers from PEG and PPG.

Preferred examples of polycarbonate polyols (PC) of formula **(II)** of the invention are aliphatic polycarbonate diols (e.g., such Desmophen® compounds from Bayer); and cycloaliphatic polycarbonate diols.

A preferred example of polycarbonate-ester polyols of formula **(II)** of the invention are aliphatic polycarbonate diols (e.g., Desmophen® from Bayer), extended by polycondensation with dicarboxylic acid or dicarboxylic acid derivatives, such as sebacinic acid dibutylester.

Examples of particularly preferred diols of formula (II) are given in the following.

Oligomeric linear polyester diols:

PCL(DEG)-2k (**II-1**),

PCL(butan diol)-4k (**II-2**),

PCL-10k (**II-3**),

PCL(HMPA diol)-5k (**II-4**), and

PPDL(butan diol)-3k (**II-5**)
wherein 2k, 3k, 4k, 5k and 10k mean a total molecular weight of approximately 2,000, 3,000, 4,000, 5,000 and 10,000 g/mol, respectively, and wherein the low-molecular weight diol used to initialize the polymerization reaction leading to the diols was diethylene glycol (DEG), 1,4-butan diol (butan diol), and 2,2-bis-(hydroxymethyl)-propionic acid (HMPA-diol) respectively; oligomeric PCL suitable for the invention is commercially available from Solvay under the trade name CAPA®;

PLGA(85/15; butan diol)-5k (**II-6**),
a poly(lactide-co-glycolide) diol with approximately 85 weight-% lactide acid units and approximately 15 weight-% glycolic acid units, 1,4-butane diol as low-molecular weight diol in the middle of the molecule, and a total molecular weight of approximately 5,000;

PCLGA(90/10; butan diol)-5k (**II-7**),
a poly(ε-caprolactone-co-glycolide) diol with approximately 90 weight-% ε-caprotactone units and approximately 10 weight-% glycolic acid units, 1,4-butane diol as low-molecular weight diol in the middle of the molecule, and a total molecular weight of approximately 5,000;

P-CUGA/LA (10/34/56; butan diol)-5k (**II-8**),
a poly(ε-caprolactone-co-glycolide-co-D, L-lactide) diol with approximately 10 weight-% ε-caprolactone units, approximately 34 weight-% glycolic acid units, and approximately 56 weight-% lactide acid units; 1,4-butane diol as low-molecular weight diol in the middle of the molecule, and a total molecular weight of approximately 5,000 g/mol;
oligomeric polyether diol:

pTHF-2k **(II-9)**,
a poly-tetrahydrofurane diol available from BASF with a molecular weight of approximately 2,000 g/mol.
oligomeric polyester-polyether diols:

PLGA(85/15)-PEG400-5k **(II-10)**, and

PLGA(85/15)-PEG600-5k **(II-11)**,
a poly(lactide-co-glycolide)-poly(ethylene glycol)-poly(lactide-co-glycolide) with approximately 85 weight-% lactide acid units and approximately 15 weight-% glycolic acid units, a molecular weight of the poly(ethylene glycol) block of approximately 600 g/mol, and a total molecular weight of approximately 5,000 g/mol; and
oligomeric polycarbonate diol:

PC-2k **(II-12)**,
available as Desmophen® C 2200 from Bayer, a linear aliphatic polycarbonate diol with terminal hydroxy groups and a molecular weight of approximately 2,000 g/mol.

If the polyol of the invention includes more than two hydroxy groups and also more than one type of oligomeric block, then said oligomeric blocks are preferably built from the same monomeric units as described above for the polyols of formula **(II)**.

The diisocyanates of the invention are defined to include at least two isocyanate groups, but may also have more (e.g., 3, 4, 5, 6, or more) isocyanate groups in the same molecule. It is preferred that the isocyanate groups are not directly bond to an aromatic compound, and in particular that the diisocyanate does not include an aromatic compound other than those that occur in biopolymers.

The diisocyanates of formula **(III-A)** of the invention preferably are compounds of formulae **(III-A1)**, **(III-A2)** and **(III-A3)**, that can be obtained as described in the following.

Compounds of formula **(III-A1)** of the invention preferably can be obtained by the following mechanism (Reaction **(B)**):

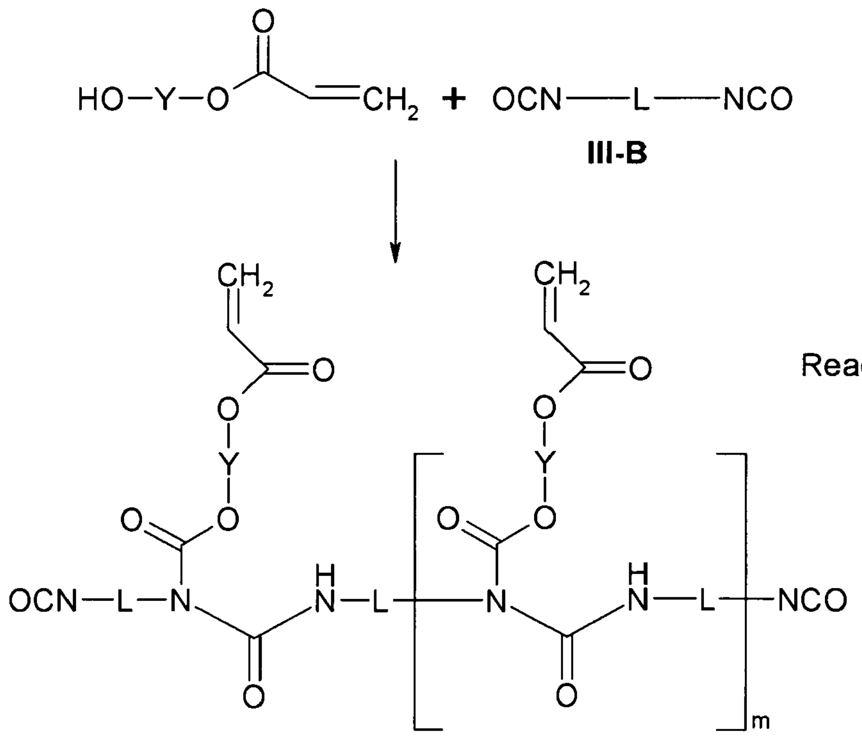

III-B

III-A1

Reaction (**B**),

wherein

Y means an organic linking group, preferably of low molecular weight, in particular a substituted or unsubstituted alkyl group, and particularly preferred $-CH_2-CH_2-$,

L means an organic linking group, preferably of low molecular weight, in particular a substituted or unsubstituted alkyl group, and particularly preferred $-(CH_2)_6-$, and

m is an integer selected to obtain the desired molecular weight, preferably from approximately 1 to approximately 10, in particular from approximately 1 to approximately 4,

and wherein the double bond of the acrylate groups is substituted or unsubstituted.

In a preferred embodiment of the invention, the compounds of formula **(III-A1)** are low viscous isocyanate functional, aliphatic acrylesters, wherein the lead structure is the allophanate group built up from hydroxyalkyl acrylate and hexamethylene diisocyanate (HDI). Such compounds have the advantage to combine two different (cross-)linking mechanisms in a single molecule and have been known as so called dual cure coating systems (light-, weather- and scratch-resistant lacquers).

A compound of formula **(III-A1)**, that is particularly preferred for the invention is Laromer® LR 9000 (Laromer) (III-1), which is commercially available from BASF.

Compounds of formula **(III-A2)** of the invention preferably are oligomeric materials, that can be obtained by reaction of a polyol, preferably a diol **(VII)** including at least one crosslinkable group, preferably an acrylate group, and a diisocyanate **(III-B)** (Reaction **(D)**):

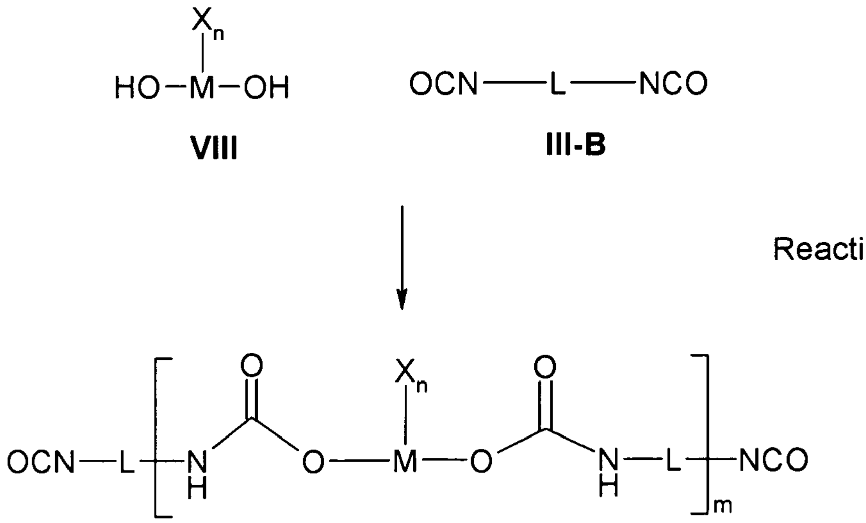

Reaction (**D**),

**III-A2**

wherein L, M, and X have the same meaning as described above, n is an integer of at least 1, preferably from 1 to 4, and particularly preferred is 1, and m is selected to obtain the desired molecular weight.

Compounds of formula **(III-A3)** of the invention preferably are oligomeric materials, that can be obtained by reaction of i) a diol **(II)**, ii) a polyol, in particular a diol **(VIII)** including at least one acrylate group, and iii) a diisocyanate **(III-B)**. Contrary to reaction mechanism **(B)** described above, the reaction is stopped earlier and is directed by known means to get the oligomeric diisocyanate **(III-A3)** (Reaction **(E)**):

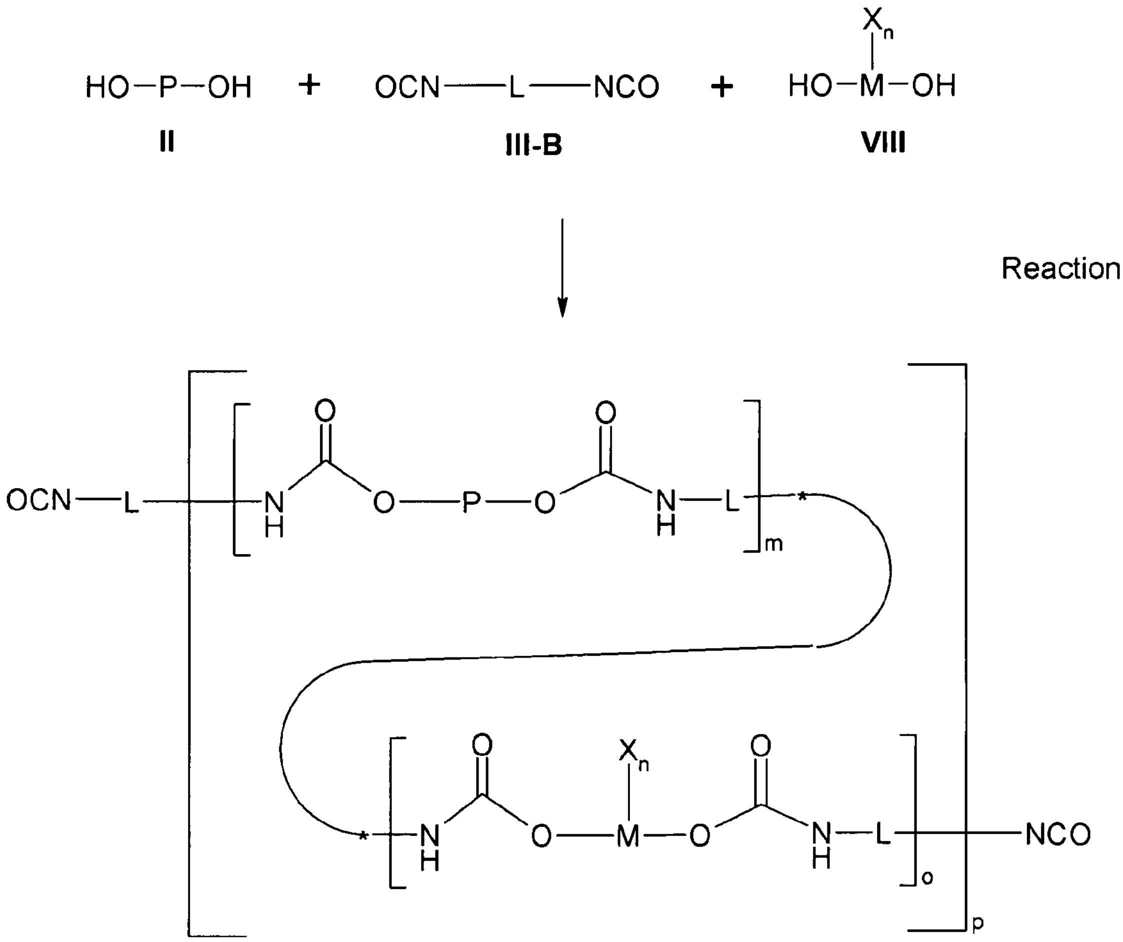

II III-B VIII

Reaction (**E**),

**III-A3**

wherein P, L, M, and X have the same meaning as described above, n is an integer of at least 1, preferably from 1 to 4, and particularly preferred is 1, and m, o, and p are integers of at least 1 and mutually independently are selected to obtain the desired molecular weight, and wherein m and o may vary in different repeating units.

The diisocyanates of formula **(III-B)** of the invention may also be of formula **(III-A),** but preferably do not include a crosslinkable group. Particularly preferred diisocyanates of formula **(III-B)** are low molecular weight compounds like hexamethylene diisocyanate, trimethyl hexamethylene diisocyanate, tolylene diisocyanate, isophorone diisocyanate and lysine diisocyanate, tolylene diisocyanate, 4,4'-diphenylmethane diisocyanate, xylylene diisocyanate, 4,4'-methylenebis (cyclohexylisocyanate), methylcyclohexane2,4-diisocyanate, methylcyclohexane-2,6-diisocyanate, 1,3-(isocyanatemethyl) cyclohexane, and isophorone diisocyanate. The diisocyanate compounds may be used alone or in combination as a mixture of two or more of them.

For medical applications, polyisocyanates such as hexamethylene diisocyanate, trimethyl hexamethylene diisocyanate, isophorone diisocyanate and lysine diisocyanate are most preferred.

It is also possible to use diisocyanate prepolymers whose molecular weight is greater than approximately 500 g/mol, and in particular up to approximately 3,000 g/mol. These polyurethane prepolymers are prepared via known reactions of the abovementioned diisocyanates with low-molecular weight diols or macrodiols (e.g., with oligoether diols, oligoester diols or oligocarbonate diols with MW of from approximately 500 to approximately 3,000 g/mol).

In a preferred embodiment of the invention, the diol **(VIII)** includes at least one acrylate group as crosslinkable group. Preferred examples of this structure are shown in the following:

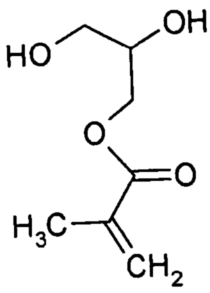

(VIII-1)

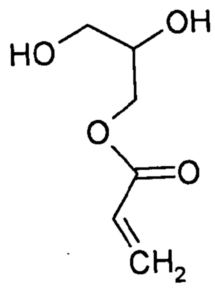

(VIII-2)

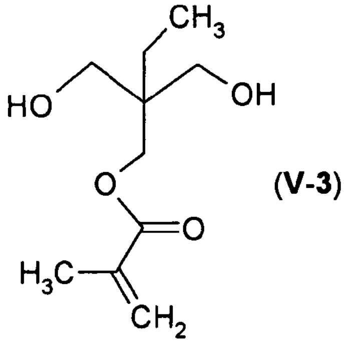

(V-3)

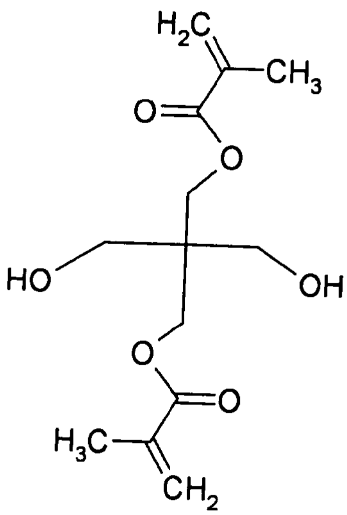

(VIII-4)

In another preferred embodiment of the invention, the diol **(VIII)** includes at least a crosslinkable group, that is not an acrylate group. Preferred examples of this structure are unsaturated diols, in particular alkene diols, that include an ethenylene group, examples of which are shown in the following:

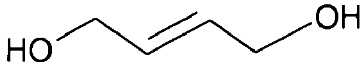

**(VIII-5)**,

, and

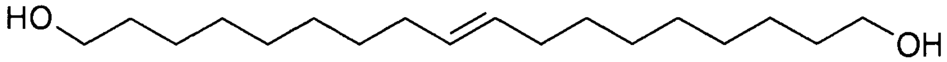

**(V-6)**.

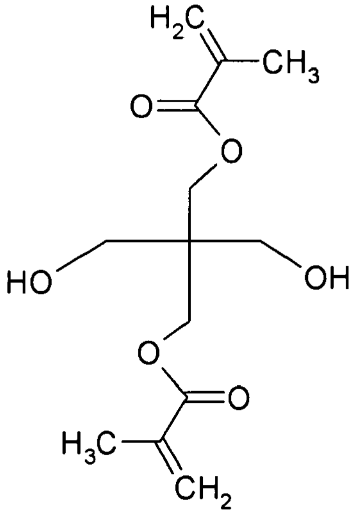

**(VIII-4)**

As described above, the M-SMP precursor of the invention may include additional polymers besides the block polymer and/or the block copolymer of the invention. Such additional polymers may be natural or synthetic. Polymers useful for the invention, including oligomers, can be linear or branched and may include side chains or any kind of dendritic structural elements. Examples of suitable additional polymers are described below.

The M-SMP networks of the invention also include interpenetrating networks (IPNs). In this embodiment of the invention the M-SMP network (e.g., component **(A)** of the IPN) is interpenetrated by at least one distinct additional polymeric component (e.g., component **(B)** of the IPN), that is not essentially chemically linked to component **(A)**. This at least one additional polymeric component cannot be separated from the network by physical methods, and can itself be a polymer network, a SMP network, or a M-SMP network of the invention. Preferably, the at least one additional component is itself not covalently crosslinked with either molecules of the own nature or with component **(A)**. Examples for suitable synthetic methods providing IPNs are described in U.S. Patent No. 7,037,984, the disclosure of which is incorporated herein by reference. Examples of additional polymeric components suitable to produce a shape memory IPN of the invention are described below.

In addition, the block polymer and/or block copolymer of the invention may include further polymeric blocks, that may be from natural or synthetic origin. Examples of suitable additional polymer blocks are described below.

Representative natural polymer blocks or polymers include proteins such as zein, modified zein, casein, gelatin, gluten, serum albumin, and collagen, and polysaccharides such as alginate, celluloses, dextrans, pullulane, and polyhyaluronic acid, as well as chitin, poly(3-hydroxyalkanoate)s, especially poly(β-hydroxybutyrate), poly(3-hydroxyoctanoate) and poly(3-hydroxyfatty acids).

Representative natural biodegradable polymer blocks or polymers include polysaccharides such as alginate, dextran, cellulose, collagen, and chemical derivatives thereof (substitutions, additions of chemical groups, for example, alkyl, alkylene, hydroxylations, oxidations, and other modifications routinely made by those skilled in the art), and proteins such as albumin, zein and copolymers and blends thereof, alone or in combination with synthetic polymers.

Representative synthetic polymer blocks or polymers include polyphosphazenes, poly(vinyl alcohols), polyamides, polyester amides, poly(amino acid)s, synthetic poly(amino acids), polyanhydrides, polycarbonate, polyacrylates,

polyalkylenes, polyacrylamides, polyalkylene glycols, polyalkylene oxides, polyalkylene terephthalates, polyortho esters, polyvinyl ethers, polyvinyl esters, polyvinyl halides, polyvinylpyrrolidone, polyesters, polylactides, polyglycolides, polysiloxanes, polyurethanes and copolymers thereof. Examples of suitable polyacrylates include poly(methyl methacrylate), poly(ethyl methacrylate), poly(butyl methacrylate), poly(isobutyl methacrylate), poly(hexyl methacrylate), poly(isodecyl methacrylate), poly(1 auryl methacrylate), poly(phenyl methacrylate), poly(methyl acrylate), poly(isopropyl acrylate), poly(isobutyl acrylate) and poly(octadecyl acrylate).

Synthetically modified natural polymers include cellulose derivatives such as alkyl celluloses, hydroxyalkyl celluloses, cellulose ethers, cellulose esters, nitrocelluloses, and chitosan. Examples of suitable cellulose derivatives include methyl cellulose, ethyl cellulose, hydroxypropyl cellulose, hydroxypropyl methyl cellulose, hydroxybutyl methyl cellulose, cellulose acetate, cellulose propionate, cellulose acetate butyrate, cellulose acetate phthalate, carboxymethyl cellulose, cellulose triacetate and cellulose sulfate sodium salt. These are collectively referred to herein as "celluloses."

The M-SMP precursor and the M-SMP networks of the invention can be biodegradable or non-biodegradable, although biodegradable polymer compositions often are preferred for in vivo medical applications. In general, these materials degrade by hydrolysis, by exposure to water or enzymes under physiological conditions, by surface erosion, by bulk erosion, or a combination thereof. Biodegradability can be achieved, if the polymer segments themselves include labile bonds, or if segments are linked via a biodegradable linkage, such as ester-, amide-, anhydride-, carbonate-, or orthoester linkages, preferably urethane and ester linkages.

Even during their degradation, the devices made from the M-SMP networks of the invention are mechanically stable over a long time, so that the supporting function of a medical device like a stent is no longer needed at the time its mechanical stability is impaired by the biodegradation.

As used herein, the term "biodegradable" refers to materials that are biore-sorbable and/or degrade and/or break down by mechanical degradation upon interaction with a physiological environment into components that are metabolizable or excretable, over a period of time from minutes to five years, preferably less than three years, in particular less than one year, while maintaining the requisite structural integrity.

As used herein in reference to polymers, the term "degrade" refers to cleavage of the polymer chain, such that the molecular weight stays approximately constant at the oligomer level and particles of polymer remain following degradation. The term "completely degrade" refers to cleavage of the polymer at the molecular level such that there is essentially complete mass loss. The term "degrade" as used herein includes "completely degrade" unless otherwise indicated.

Biodegradable segments that are preferred in the context of the invention, are, for example, described in U.S. Patent No. 6,160,084, the disclosure of which is included herein by reference.

Representative synthetic degradable polymer segments include polyhydroxy acids, such as polylactides, polyglycolides and copolymers thereof; poly(ethylene terephthalate); polyanhydrides, poly(hydroxybutyric acid); poly(hydroxyvaleric acid); poly[lactide-co-(ε-caprolactone)]; poly[glycolide-co-(ε-caprolactone)]; polycarbonates, poly(pseudo amino acids); poly(aminoacids); poly(hydroxyalkanoate)s; polyanhydrides; polyortho esters; and blends and copolymers thereof. Polymers containing labile bonds, such as polyanhydrides and polyesters, are well known for their hydrolytic reactivity. Their hydrolytic degradation rates can generally be altered by simple changes in the polymer backbone and their sequence structure.

Non-biodegradable M-SMP networks of the invention, if used for medical applications, preferably do not include aromatic groups, other than those present in naturally occurring amino acids.

Various polymers, such as polyacetylene and polypyrrole, are conducting polymers. These materials are particularly preferred for uses in which electrical conductance is important. Examples of these uses include tissue engineering and any biomedical application where cell growth is to be stimulated. These materials may find particular utility in the field of computer science, as they are able to absorb heat without increasing in temperature better than SMAs. Conducting M-SMP networks are useful in the field of tissue engineering to stimulate the growth of tissue, for example nerve tissue.

Examples of non-biodegradable synthetic polymer segments include ethylene vinyl acetate, poly(meth)acrylic acid, polyamides, polyethylene, polypropylene, polystyrene, polyvinyl chloride, polyvinylphenol, and copolymers and mixtures thereof.

The polymers can be obtained from commercial sources or can be synthesized from monomers obtained from commercial sources, using standard techniques.

It can be possible, that the M-SMP precursor of the invention itself can be used for applications, were usual thermoplastic polymers or shape memory thermoplastic polymers are needed. Nevertheless, as the precursor includes reactive crosslinkable groups, it is preferred to crosslink the precursor to obtain the new M-SMP networks of the invention.

Preferred M-SMP precursors of the invention can conveniently be processed using known methods to form thermoplastic polymers into shape, using known machines and tools; they can be blown, casted, extruded or injection molded in any desired shape to obtain three dimensional devices of high quality, that can be crosslinked to a high degree and thereby give three dimensional devices with superior mechanical and shape memory properties, with an exact form, reproducible dimensions and with a high mechanical long-term stability. In addition, different processing methods and

recasting can be combined, so that a tube or a filament is extruded in the first step, that thereafter is calibrated to a defined diameter and cutted into an appropriate length.

A particular advantage of preferred M-SMP precursors of the invention compared to known shape memory network precursors is the optimal compromise of fluidity and mechanical stability when processing the precursors of the invention and their elasticity and flexibility even before crosslinking. Known precursors suitable for shape memory polymer networks usually have a sufficient fluidity to be processed using common methods, but show an unsatisfactory mechanical stability during the processing and often are brittle before the crosslinking. Therefore, it is difficult to produce a three-dimensional device from known precursors and to exactly maintain its form and dimensions from the moment of processing until it is crosslinked to fix its permanent form.

Preferred M-SMP precursors of the invention have a sufficient mechanical stability at usual processing temperatures, so that a tube extruded therefrom maintains its original circular cross-section until it is crosslinked. Tubes from known precursors, on the other hand, tend to deform before their permanent form is fixed. Despite their higher mechanical stability at processing temperatures, preferred M-SMP precursors of the invention have the additional advantage of being less brittle than the known ones, so that it is easier to handle the processed three dimensional devices of the invention without breaking them. This is particularly advantageous for separating an injection molded product from its mold.

Although the tools for processing of polymer network precursors are produced with extraordinary care, it can not always be avoided, that they have irregularities (e.g., small scratches,) that may be impressed to the produced three dimensional devices. Although very small faults that are thereby produced may not affect the function of the devices, their value might nevertheless be decreased, if the fault is visible. Much worse, such faults can weaken the devices to such an extend, that their function is no longer assured and the marred devices have to be discarded. It has been found, that when using preferred M-SMP precursors of the invention such faults are less likely to occur.

Preferred M-SMP precursors of the invention can also be shaped by other methods known to those of skill in the art for shaping solid objects, for example, laser ablation, micromachining, use of a hot wire, and by CAD/CAM (computer aided design/computer aided manufacture) processes. These processes are also advantageous for shaping the preferred M-SMP network polymers of the invention.

The crosslinking (curing) of the M-SMP precursor of the invention to obtain the M-SMP network of the invention is usually performed after the processing (forming into shape) and can be done by known methods suitable for the crosslinkable groups present in the M-SMP precursor of the invention. Preferably, the crosslinking is promoted thermally, by ultra violet light (UV), or by a combination of thermal and UV energy to produce three dimensionally crosslinked polymer networks.

To initiate the crosslinking reaction, the M-SMP precursor of the invention preferably includes crosslinking initiators, in particular heat (chemical) and/or light (photo) sensitive initiators. Preferably the initiators are used in an amount of approximately 0.1 to approximately 5 weight-%, in particular from approximately 0.1 to approximately 1.5 weight-%, and particularly preferred from approximately 0.1 to approximately 0.5 weight-%. In a preferred embodiment of the invention, photoinitiators are used, in particular Esacure® KIP 150 (Oligo-[2-hydroxy-2-methyl-1-[4-(1-methylvinyl) phenyl] propanone) from Lamberti; a 1 : 1 mixture of D,L-champhorquinone (2,3-bomandion) and ethyl-2-dimethylaminobenzoate; Lucirin® TPO; Lucirin®TPO-L; Darocur® 1173; Irgacure® 184; Irgacure® 500; Esacure® KIP 100 F; and benzophenone.

Preferred crosslinking conditions and additives useful for the crosslinking are e.g. described in international publication WO 2007/096708, in particular on pages 13 and 14, the disclosure of which is enclosed herein by reference.

The crosslinking reaction is most efficient if performed in the melt and under exclusion of oxygen, and for the photocrosslinking with UV energy the materials of the invention are irradiated with actinic radiation having a wavelength of preferably from approximately 320 to 500 nm. The reaction conditions can be optimized by a person skilled in the art by usual experimental techniques.

Although the crosslinking is usually done in the melt, it has been found, that the preferred shape memory precursors of the invention can also be crosslinked at temperatures that are low enough for the polymer to be sufficiently mechanically stable under the applied temperature, so that hollow three dimensional articles made therefrom can be crosslinked successfully.

During the crosslinking step, the M-SMP precursor of the invention preferably is almost free from solvents, but the crosslinking can also be performed in the presence of one or more solvent(s). In this case, the solvent(s) preferably is(are) removed from the formed gel in a subsequent step. After the crosslinking step, and where necessary, the removal of the solvent(s) the M-SMP network of the invention is obtained in its permanent form.

The M-SMP networks of the invention are able to store at least two forms (shapes) in memory so that they can consecutively be programmed into at least two stable temporary forms and switched back stepwise by a stimulus, like a temperature increase, to their memorized temporary and then permanent form. The permanent form is defined therein by the two- and in particular three-dimensionally crosslinked network structure. The temporary forms are defined by polymer segments, that reversibly stabilize said forms as known in the art so that the memorized forms are only recovered

after application of an appropriate stimulus.

Stimuli causing shape changes preferably can be temperature, ionic change, pH, light, electric field, magnetic field or ultrasound. Particularly preferred is a temperature increase as stimulus.

In an embodiment of the invention, at least two oligomeric blocks are responsive to different stimuli, so that their form change can be triggered independently by each of the stimuli.

In this embodiment, one of the segments ("the first segment") may be responsive to temperature, ionic change, pH, light, electric field, magnetic field or ultrasound and another segment may be responsive to a stimulus taken from the same group, but being different to that of the first segment. In this embodiment it is preferred, if at least one of the segments is responsive to an increase in temperature.

When a M-SMP network of the invention is cooled below the melting point or glass transition temperature of one of its soft segments, while the shape is deformed with respect to the permanent shape, that (temporary) shape is fixed. The original shape is recovered by heating the material above the melting point or glass transition temperature of the soft segment but below the melting point or glass transition temperature of the hard segment. Further programming steps are possible as described above.

In another method for setting a temporary shape, the material is deformed at a temperature lower than the melting point or glass transition temperature of the soft segment, which has the lowest transition temperature, resulting in stress and strain being absorbed by the soft segment. When the material is heated above the melting point or glass transition temperature of said soft segment, but below the melting point (or glass transition temperature) of the hard segment, the stresses and strains are relieved and the material returns to its original shape.

The M-SMP network of the invention and the articles made therefrom are preferably programmed in that they are in the following order

i) heated to a temperature that is above the transition temperature of the soft segment with the higher transition temperature, but below the decomposition temperature of the article,

ii) formed into an arbitrary shape, and

iii) fixed in this shape, until the temperature has been reduced below said transition temperature, but is still higher than the transition temperature of another soft segment,

iv) formed into another arbitrary shape, and

v) fixed in this shape until the temperature has been reduced below this transition temperature.

A certain amount of energy needs to be transferred to the M-SMP network of the invention in order to recover a memorized shape. For the thermal shape memory effect, the amount of energy required to fully recover a memorized shape depends on the heat capacity of the material. For light sensitive materials, however, the amount of energy depends on the dosage of irradiation. In a preferred embodiment of a thermal shape memory effect, the polymer has a sharp thermal transition, which is triggered based on the duration the material is exposed to a temperature greater than $T_{trans}$.

Other factors affecting the transition include the mass or size of the material and the temperature and heat transfer coefficient of the medium or environment in contact with (and used to heat) the material. For example, the higher the temperature of the environment, the more quickly the memorized shape is recovered.

Several physical properties of M-SMPs other than the ability to memorize shape are significantly altered in response to external changes in temperature and stress, particularly at the melting point or glass transition temperature of the soft segments. These properties include the elastic modulus, hardness, flexibility, vapor permeability, damping, index of refraction, and dielectric constant. The elastic modulus (the ratio of the stress in a body to the corresponding strain) of a M-SMP can change by a factor of up to 200 when heated above the melting point or glass transition temperature of a soft segment. Also, the hardness of the material changes dramatically when a soft segment is at or above its melting point or glass transition temperature. When the material is heated to a temperature above the melting point or glass transition temperature of a soft segment, the damping ability can be up to five times higher than a conventional rubber product.

A particular advantage of preferred M-SMP networks of the invention is that they show little to no tendency of losing their mechanical stability, neither in their permanent nor in their programmed form(s). This means, that an implanted tubular device (a stent) will be stable and maintain its diameter over a long period of time and therefore hold open a blood vessel at a constant diameter. In other words, such an implanted device will show little to no recoil.

In a preferred embodiment of the present invention, the M-SMP networks have a gel content of approximately 60% or higher, in particular of approximately 80% or higher, and especially preferred of approximately 90% and higher.

Complex and exactly reproducible shape changes that offer a very high usability, and which should not be

mistaken for simple shrinking or swelling effects, are only available if the M-SMP has high values for shape recovery and shape fixity. This is ensured by the M-SMP networks of the invention that can readily recover to their original molded shape following numerous thermal cycles, and that preferably have a shape recovery of each of the memorized shapes of approximately 30% or higher, in particular of approximately 60% or higher, and especially preferred of approximately 90% and higher, and a shape fixity of approximately 60% or higher, in particular of approximately 80% or higher, and especially preferred of approximately 90% and higher.

In a preferred embodiment of the invention, the degree of crystallinity of the polymer or segments thereof is between approximately 3% and approximately 80%, more preferably between approximately 3% and approximately 60%.

The invention is also related to articles including a M-SMP network of the invention, wherein said articles preferably include at least a part that has been formed from the M-SMP precursor of the invention and thereafter has been crosslinked as described above. In a preferred embodiment of the invention, such articles at least partially enclose a hollow space, and an example of such an article is a tubular device.

Any of a variety of therapeutic, prophylactic and/or diagnostic agents can be incorporated within the polymer compositions of the invention, and articles made therefrom can also be provided with coatings that include such agents, so that the compositions and articles of the invention can locally or systemically deliver the incorporated agents following administration to a patient. Examples include synthetic inorganic and organic compounds or molecules, proteins and peptides, polysaccharides and other sugars, lipids, and nucleic acid molecules having therapeutic, prophylactic or diagnostic activities. Nucleic acid molecules include genes, plasmid DNA, naked DNA, antisense molecules which bind to complementary DNA to inhibit transcription, ribozymes and ribozyme guide sequences. The agents to be incorporated can have a variety of biological activities, such as vasoactive agents, neuroactive agents, hormones, growth factors, cytokines, anaesthetics, steroids, anticoagulants, antiinflammatories, immunomodulating agents, cytotoxic agents, prophylactic agents, antibiotics, antivirals, antisense, antigens, and antibodies. In some instances, the proteins may be antibodies or antigens which otherwise would have to be administered by injection to elicit an appropriate response. Proteins are defined as consisting of approximately 100 amino acid residues or more; peptides are less than approximately 100 amino acid residues. Unless otherwise stated, the term protein refers to both proteins and peptides. Polysaccharides, such as heparin, can also be administered. Compounds with a wide range of molecular weight, for example, between approximately 10 and approximately 500,000 grams per mole, can be encapsulated.

Imaging agents which may be utilized for the articles of the invention include commercially available agents used in positron emission tomography (PET), computer assisted tomography (CAT), single photon emission computerized tomography, x-ray, fluoroscopy, magnetic resonance imaging (MRI), and ultrasound agents.

The polymer compositions of the invention, and articles made therefrom, can be used to prepare articles of manufacture for use in biomedical applications. For example, sutures, orthodontic materials, bone screws, nails, plates, catheters, tubes, films, stents, PFO devices, orthopedic braces, splints, tape for preparing casts, and scaffolds for tissue engineering, contact lenses, drug delivery devices, implants, and thermal indicators, can be prepared.

The polymer compositions of the invention, and articles made therefrom, can be formed into the shape of an implant which can be implanted within the body to serve a mechanical function. Examples of such implants include rods, pins, screws, plates and anatomical shapes.

The polymer compositions of the invention, and articles made therefrom, can be combined with fillers, reinforcement materials, radioimaging materials, excipients or other materials as needed for a particular implant application. Examples of fillers include calcium-sodium-metaphosphate which is described in U.S. Patent No. 5,108, 755, the disclosure of which is incorporated herein by reference. Those of skill in the art can readily determine a suitable amount of these materials to include in the compositions.

Examples of non-medical type applications for polymer compositions of the invention, and articles made therefrom, include items for which disposal is an issue, such as disposable diapers and packaging materials, self healing plastic parts (e.g., suitable in the automotive industry, switches, sensors, and locking systems). The materials of the invention can also facilitate the assembly or disassembly of devices (e.g., the fixation of glasses in spectacles or the opening or disintegration of a case for easy recycling of its components).

Certain articles of the invention are designed to hold their intended shape unless acted upon in a manner inconsistent with their normal use. For example, a car bumper will hold its intended shape unless it has been impacted. These articles are to be used in their intended shape and repaired, for example, by application of heat, once they are damaged.

Other articles of manufacture are designed to be used such that the first shape is intended for an initial use, and a second shape is intended for a subsequent use. Examples of these include biomedical devices which can form a second shape upon reaching at body temperature, or upon application of an external stimulus which heats the device above body temperature.

Still other articles of manufacture are designed to be used such that their shape changes in reaction to, or adjustment to, changes in temperature, such as thermosensors in medical devices.

As becomes clear from the broad variety of articles that can advantageously be prepared from the M-SMP

network polymers of the invention, there is a wide range of applications and uses for such articles.

It will be apparent to those skilled in the art that various modifications and variations can be made in the present invention and specific examples provided herein without departing from the spirit or scope of the invention. Thus, it is intended that the present invention covers the modifications and variations of this invention that come within the scope of any claims and their equivalents.

The following examples are for illustrative purposes only and are not intended, nor should they be interpreted to, limit the scope of the invention.

## EXAMPLES

**Example 1**

**Synthesis of the thermoplastic polymer**

In a vacuum dried round-bottom flask were added 100 g of each of the diols according to table 1 under an argon atmosphere at room temperature. During the complete reaction as described in the following the argon atmosphere was preserved. After heating to a temperature of approximately 70° C were added 750 mL of the solvent dichloro ethane and it was stirred for approximately 0.5 hours until a solution was obtained. After addition of approximately 750 ppm 4-methoxyphenol (with respect to the total weight of the diol(s)) the mixture was stirred again for approximately 0.5 hours and then Laromer® LR 9000 (Laromer) from BASF (**III-1**) was added. The weight of Laromer was calculated by the formula: Weight of Laromer = 0.075 x OH-number of the diol(s) x weight of the diol(s) / NCO-number of Laromer.

Thereafter, it was further stirred for approximately 0.5 hours at approximately 70° C under argon atmosphere. If within this time no significant reaction could be observed (no viscosity increase and constant NCO-absorption in the IR spectrum at 2270 $cm^{-1}$), then 50 ppm Sn as dibutyl tin dilaurate (available from Sigma-Aldrich) were added to start the reaction. The reaction mixture was stirred at 70° C for approximately 1 to 4 hours under argon atmosphere until the absorption of the reactive isocyanate could no longer be detected by FTIR at 2270 $cm^{-1}$. Thereafter, 10 mL ethanol were added to finally stop the reaction and the solvent was removed using a vacuum dryer at room temperature. The molecular weight of the thermoplastic polymers measured by gel permeation chromatography as described below was between approximately 60,000 to approximately 80,000 g/mol.

**Table 1. Thermoplastic Block Polymers of the Invention Including Two Different Diols**

| Material | Diol 1 | Diol 2 |
|---|---|---|
| **I-A-1** | **(II-1)** | **(II-5)** |
| **I-A-2** | **(II-2)** | **(II-5)** |
| **I-A-3** | **(II-3)** | **(II-5)** |

**Crosslinking of the thermoplastic polymers to networks**

The crosslinkable thermoplasts of the invention were compounded with 0,2 weight-% of the photoinitiator Esacure KIP 150 (Oligo-[2-hydroxy-2-methyl-1-[4-(1-methylvinyl) phenyl]-propanone), and evacuated at elevated temperatures to remove oxygen from the material. Thereafter the composition is irradiated between glass plates at a thickness of 0.5 mm with an EXFO, Omnicure 2000 UV lamp until the crosslinking is completed. In the following the M-SMP networks obtained from a specific precursor material are identified by the code of the respective thermoplastic material supplemented by "**NW**". As an example, the network obtained from **I-A-1** is identified as **"I-A-1 NW"**.

**Characterization of the Materials**

The molecular weights of the polymeric materials were determined by gel permeation chromatography (GPC) using standard procedures. THF was used as eluent and polystyrene, Triple SEC as a standard. $M_n$ means the number-average molar mass and $M_w$ the weight-average molar mass. If not explicitly specified, then the molar mass (molecular weight) is given as $M_n$ value.

The thermal properties of the materials were evaluated by differential scanning calorimetry (DSC) with a Mettle Toledo DSC 822 equipment using 5 to 10 mg of material and heating between -100 to 150° C with a heating rate of 10 K / minute and a cooling rate of 10 K / minute. Two scans were recorded and the data were taken from the second heating scan. The peak related to a shape transition had a certain temperature range, that was analyzed by measuring the temperature, at which the transition begins **(Peak(1,2) Tm, onset),** the temperature at the maximum of the peak **(Peak(1,2) Tm, peak),** and the temperature at which the transition is completed **(Peak(1,2) Tm, end). Tm,** onset was obtained mathematically from the measurement at the point, at which the tangent through the inflection point at the low-temperature side of the peak subtends the straight line best fitted to be the baseline underlying the peak. In cases where no single inflection point could be indentified, but a region with an approximately constant gradient, a straight line through

said region was used instead of the tangent. **Tm, end** is obtained accordingly at the high temperature side of the peak.

Fourier transform infrared spectra (FTIR spectra) were run with a Scimitar FTS 2000 Series equipment having an ATR-crystal ZnSe, DTGS-detector. 32 scans were run to measure the background and also 32 scans for the sample.

The gel content of polymer networks was determined after extraction at room temperature (room temperature as referred to herein defines a temperature of from 20 to 25°C and typically 23°C, unless otherwise stated) in chloroform for 2 h and drying the gels in vacuum until constant weight. The gel content was calculated according to the formula

$$\text{Gel Content (\%)} = 100 \times m_1 / m_2,$$

wherein $m_1$ is the weight of the insoluble part after extraction and drying, and $m_2$ is the weight before extraction.

Cyclic thermomechanical measurements at room temperature were done to determine the tensile strength, E-modulus and elongation at break values of the (non-extracted) polymer network films cut to DIN EN ISO 527-2 / 1 BB specifications. A Zwick Z005 tensile tester equipped with a thermo chamber at a speed of 10 mm/minute using a 1 kN force sensor (DIN EN ISO 527-2 / 1 BB 10) was used for this purpose.

**Table 2. Thermal Characterization of Shape Memory Networks with Two Different Diols**

| Material | Peak 1 Tm, onset °C | Peak 1 Tm, peak °C | Peak 1 Tm, end °C | T Reversal point °C | Peak 2 Tm, onset °C | Peak 2 Tm, peak °C | Peak 2 Tm, end °C |
|---|---|---|---|---|---|---|---|
| **I-A-1 NW** | 15 | 39 | 48 | 53 | 76 | 88 | 94 |
| **I-A-2 NW** | 29 | 46 | 54 | 57 | 71 | 82 | 87 |
| **I-A-3 NW** | 31 | 43 | 50 | 53 | 73 | 80 | 85 |

If more than one sample of the same composition was prepared, then the average values of the measured temperatures are shown in table 2.

**Table 3. Gel Contents**

| Material | Gel Content (%) |
|---|---|
| **I-A-2 NW** | 95 |
| **I-A-3 NW** | 97 |

If more than one sample of the same composition was prepared, then the average value of the measured gel contents is shown in table 3.

The SME of the materials was tested by programming three dimensional devices with two shapes in memory and it was observed, that the first temporary and the permanent shape could be recovered by a stepwise temperature increase. Pictures taken from several programming and recovery steps of the experiment with I-A-2 NW are shown as **Fig.** 1 to 6.

**Table 4. Tensile strength, E-modulus and Elongation at Break Values**

| Material | **Young's modulus ($E_t$)** MPa | **Elongation at** break ($\varepsilon_b$) % | **Tensile** strength ($\sigma_b$) MPa |
|---|---|---|---|
| **I-A-3 NW** | 221 | 213 | 36 |

It has been found, that the materials of the invention have good triple shape properties, that can advantageously been used to switch between different shapes of a programmed three dimensional article.

Although the invention has been described and illustrated with a certain degree of particularity, it is understood that the present disclosure has been made only by way of example, and that numerous changes in the conditions and order of steps can be resorted to by those skilled in the art without departing from the spirit and scope of the invention.

## Claims

1. Precursor composition for shape memory polymer networks, which are able to hold more than one shape in memory, comprising at least two different oligomeric segments, wherein the precursor comprises at least one crosslinkable group, and wherein the precursor can be crosslinked to obtain a shape memory polymer network, which is able to hold more than one shape in memory, **characterized in that** the precursor comprises at least one composition of one of formulae **(I-A)** to **(I-G),** wherein
the composition **(I-A)** comprises two different oligomeric polyols and a diisocyanate, that comprises a crosslinkable group;
the composition **(I-B)** is produced in a two-step process, wherein in a first step two different oligomeric polyols and a diisocyanate, that is added in molar excess with respect to the hydroxy groups of the polyols, are linked by reaction of the hydroxy and the isocyanate groups to give an isocyanate group terminated block copolymer in the first step, to which a hydroxy-substituted crosslinkable compound is added in the second step;
the composition **(I-C)** comprises two different oligomers, that are obtainable by terminal functionalization of oligomeric polyols with crosslinkable groups;
the composition **(I-D)** comprises two different oligomers, that are obtainable by functionalization of two different oligomeric polyols independently from each other with a diisocyanate, that comprises a crosslinkable group;
the composition **(I-E)** comprises a block copolymer with two different oligomeric blocks (segments), wherein the block copolymer is terminally functionalized with crosslinkable groups;
the composition **(I-F)** comprises two different oligomeric polyols and a diisocyanate, wherein at least one of the polyols has more than two hydroxy groups; and
the composition **(I-G)** comprises components for two polymer systems, that can independently be crosslinked by different crosslinking mechanisms (dual cure composition).

2. Precursor composition according to claim 1, further **characterized in that** the crosslinkable group is selected from vinyl groups, substituted or unsubstituted acrylate groups or combinations thereof.

3. Precursor composition according to any of the preceding claims, further **characterized in that** it additionally comprises at least one polymeric and/or oligomeric and/or low-molecular weight ingredients or combinations thereof.

4. Method for shaping a precursor for a shape memory polymer network, **characterized in that** the precursor composition according to any of claims 1 to 3 is processed by at least one conventional method known to form thermoplastic polymers into a shape.

5. Method for the production of a shape memory polymer network, **characterized in that** the precursor composition according to any of claims 1 to 3 is crosslinked.

6. Method according to claim 5, further **characterized, in that** UV radiation and/or thermal energy is used for the crosslinking.

7. Shape memory polymer network obtainable by the method according to any of claims 5 or 6.

8. Shape memory polymer network according to claim 7, further **characterized, in that** it has at least one shape in memory.

9. Shape memory polymer network according to claim 8, further **characterized, in that** it has at least two shapes in memory.

10. Method for forming an article comprising a shape memory polymer network, comprising the steps of shaping a precursor composition according to claim 4, followed by crosslinking the formed article by the method according to any one of claims 5 and/or 6.

11. Article comprising a shape memory network, **characterized in that** it comprises a shape memory polymer network according to any of claims 7 to 9.

12. Article according to claim 11, obtainable by the method of claim 10.

13. Article according to any of claims 11 or 12, further **characterized in that** it at least partially encloses a hollow space.

**14.** Article according to any of claims 11 to 13, further **characterized in that** it is selected from sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

**15.** Method of programming an article comprising a shape memory polymer network, **characterized in that** the article according to any of claims 11 to 14 is in the following order

i) heated to a temperature that is above the transition temperature of the soft segment with the higher transition temperature, but below the decomposition temperature of the article,
ii) formed into a first arbitrary shape, and
iii) fixed in this shape, until the temperature has been reduced below said transition temperature, but is still higher than the transition temperature of another soft segment,
iv) formed into a second arbitrary shape, and
v) fixed in this shape until the temperature has been reduced below this transition temperature.

**16.** Article according to any of claims 11 to 14, further **characterized in that** it has at least one shape in memory.

**17.** Article according to claim 16, further **characterized in that** it has at least two shapes in memory.

**18.** Article according to claim 17 obtainable by the method of claim 15.

**19.** Use of the article according to any of claims 11 to 14, and 16 or 18.

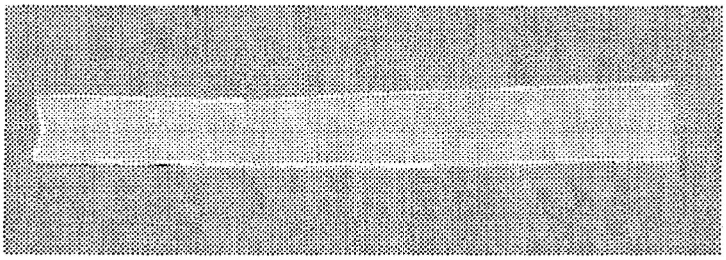

Fig. 1

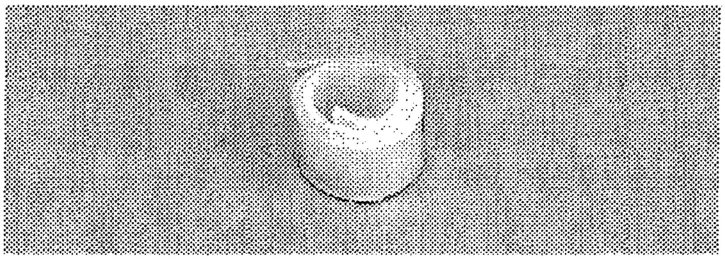

Fig. 2

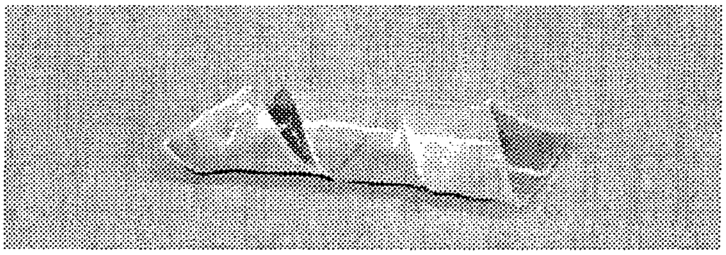

Fig. 3

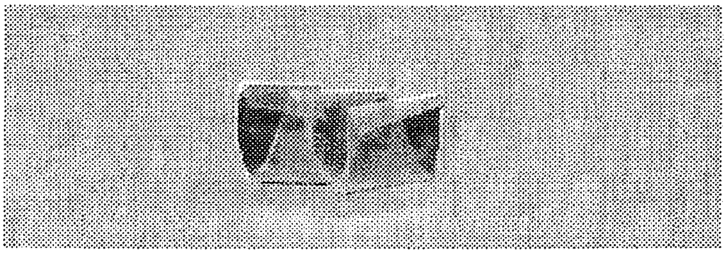

Fig. 4

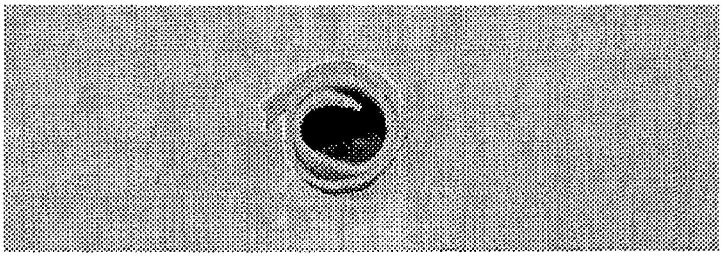

Fig. 5

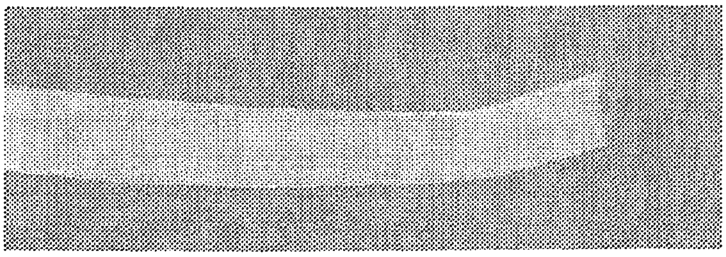

Fig. 6

European Patent Office

# EUROPEAN SEARCH REPORT

Application Number
EP 07 02 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 362 879 A (MNEMOSCIENCE GMBH [DE]) 19 November 2003 (2003-11-19) * paragraphs [0017] - [0019], [0032], [0033], [0040], [0041], [0046] * * claims 1-6 * | 1-19 | INV. C08G18/67 C08G18/81 |
| X,Y | EP 1 801 140 A (MNEMOSCIENCE GMBH [DE]) 27 June 2007 (2007-06-27) * paragraphs [0019] - [0030], [0048] - [0050], [0055] - [0057] * * claims 1,2,5,6 * | 1-19 | |
| Y | ANNETTE M SCHMIDT: "Bioabbaubare Polymernetzwerk-Systeme mit Formgedächtniseffekt und kristallisierbarem Schaltsegment" 6 June 2002 (2002-06-06), BIOABBAUBARE POLYMERNETZWERK-SYSTEME MIT FORMGEDAECHTNISEFFEKTUND KRISTALLISIERBAREM SCHALTSEGMENT, XX, XX , XP002260848 * page 147 - page 149 * * page 166 - page 167 * * page 171 - page 175 * | 1-19 | |
| A,D | LIU G ET AL: "Novel shape-memory polymer with two transition temperatures" 1 January 2005 (2005-01-01), MACROMOLECULAR: RAPID COMMUNICATIONS, WILEY VCH VERLAG, WEINHEIM, DE, PAGE(S) 649 - 652 , XP002437004 ISSN: 1022-1336 * the whole document * | 1-19 | |

TECHNICAL FIELDS SEARCHED (IPC)

C08G

The present search report has been drawn up for all claims

1

| Place of search | Date of completion of the search | Examiner |
|---|---|---|
| Munich | 9 May 2008 | Heidenhain, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 07 02 5236

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2008

| Patent document cited in search report | Publication date | Patent family member(s) | Publication date |
|---|---|---|---|
| EP 1362879 A | 19-11-2003 | AT 391145 T | 15-04-2008 |
| | | CA 2425816 A1 | 18-10-2003 |
| | | DE 10217351 B3 | 12-02-2004 |
| | | US 2004024143 A1 | 05-02-2004 |
| EP 1801140 A | 27-06-2007 | WO 2007096708 A2 | 30-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6720402 B
- US 6388043 B
- US 6160084 B
- US 7217744 B
- US 6852825 B
- US 7037984 B
- WO 9942528 A
- WO 9942147 A
- WO 2004046221 A
- WO 2004062706 A
- WO 2004090042 A
- WO 2005012388 A
- WO 2005028534 A
- WO 2007096708 A
- EP 1846470 A
- EP 1818348 A
- EP 1837160 A
- EP 1818346 A
- WO 2004006885 A
- US 20060140999 A
- WO 2007104757 A
- WO 2007118766 A
- EP 1818161 A
- US 6160084 A
- US 5108755 A